# EUROPEAN PATENT APPLICATION

(11) **EP 4 325 322 A1**
(43) Date of publication of application: **21.02.2024**
(21) Application number: 23189848.7
(22) Date of filing: 04.08.2023
(51) Int. Cl.: G05D 1/02, A01B 69/04

(54) **ROUTE SETTING METHOD, ROUTE SETTING SYSTEM, AND ROUTE SETTING PROGRAM**

(30) Priority: 18.08.2022 JP 2022130456
(71) Applicant: Yanmar Holdings Co., Ltd., Osaka-shi, Osaka (JP)
(72) Inventor: KIYOSAWA, Yu, Osaka (JP); TAKAHASHI, Mamoru, Osaka (JP); NISHII, Yasuto, Okayama (JP)
(74) Representative: Novagraaf International SA

(57) **Abstract**

[Problem] To provide an autonomous traveling method, an autonomous traveling system, and an autonomous traveling program that may set a turning route in response to the need of users.

[Solution] A setting processing unit 213 sets a predetermined turning route among a plurality of turning routes having different turning methods, for each of a plurality of work paths included in a field F where a work vehicle 10 autonomously travels in accordance with a target route R and sets the target route R including the turning route set for each of the plurality of work paths and a work route set corresponding to the field F.

## Description

### TECHNICAL FIELD

The present invention relates to a route setting method, a route setting system, and a route setting program to set a route along which a work vehicle autonomously travels.

### BACKGROUND ART

There are known systems that may cause a work vehicle to autonomously travel on straight routes and turning routes in a field. Turning methods of the turning routes include, for example, turning methods that do not include backward travel and turning methods that include backward travel. There are conventionally known technologies for setting the turning method of the turning route in accordance with the selection operation of a user (see, for example, Patent Document 1).

### PRIOR ART DOCUMENT

### PATENT DOCUMENT

Patent Document 1: Japanese Unexamined Patent Application Publication No. 2019-168812

### SUMMARY OF INVENTION

### TECHNICAL PROBLEM

According to the conventional technology, the turning method is set uniformly for the field, and therefore it is not possible to set the turning method in accordance with the position in the field. This makes it difficult to set the turning route in response to the need of the user in consideration of the field state, work efficiency, etc.

The present invention has an object to provide a route setting method, a route setting system, and a route setting program that may set a turning route in response to the need of users.

### SOLUTION TO PROBLEM

A route setting method according to the present invention is a route setting method including setting a predetermined turning route among a plurality of turning routes having different turning methods, for each of a plurality of work paths included in a work area where a work vehicle autonomously travels in accordance with a target route and setting the target route including the turning route set for each of the plurality of work paths and a work route set corresponding to the work area.

A route setting system according to the present invention includes a setting processing unit that sets a predetermined turning route among a plurality of turning routes having different turning methods, for each of a plurality of work paths included in a work area where a work vehicle autonomously travels in accordance with a target route and that sets the target route including the turning route set for each of the plurality of work paths and a work route set corresponding to the work area.

A route setting program according to the present invention is a route setting program causing one or more processors to execute setting a predetermined turning route among a plurality of turning routes having different turning methods, for each of a plurality of work paths included in a work area where a work vehicle autonomously travels in accordance with a target route, and setting the target route including the turning route set for each of the plurality of work paths and a work route set corresponding to the work area.

### ADVANTAGEOUS EFFECTS OF INVENTION

According to the present invention, it is possible to provide a route setting method, a route setting system, and a route setting program that may set a turning route in response to the need of users.

### BRIEF DESCRIPTION OF DRAWINGS

FIG. 1 is a block diagram illustrating a configuration of an autonomous traveling system according to an embodiment of the present invention.
FIG. 2A is a side view illustrating an example of a work vehicle according to the embodiment of the present invention.
FIG. 2B is a top view illustrating an example of a work vehicle according to the embodiment of the present invention.
FIG. 3 is a diagram illustrating an example of a field and a target route according to the embodiment of the present invention.
FIG. 4 is a diagram illustrating another example of the field and the target route according to the embodiment of the present invention.
FIG. 5 is a diagram illustrating an example of a menu screen displayed on an operation terminal according to the embodiment of the present invention.
FIG. 6 is a diagram illustrating an example of a headland setting screen displayed on the operation terminal according to the embodiment of the present invention.
FIG. 7 is a diagram illustrating an example of a turning method of the work vehicle according to the embodiment of the present invention.
FIG. 8 is a diagram illustrating another example of the turning method of the work vehicle according to the embodiment of the present invention.
FIG. 9 is a diagram illustrating another example of the turning method of the work vehicle according to the embodiment of the present invention.
FIG. 10 is a diagram illustrating an example of a field edge selection screen displayed on the operation terminal according to the embodiment of the present invention.
FIG. 11 is a diagram illustrating an example of a priority mode selection screen displayed on the operation terminal according to the embodiment of the present invention.
FIG. 12 is a diagram illustrating an example of the priority mode selection screen displayed on the operation terminal according to the embodiment of the present invention.
FIG. 13 is a diagram illustrating an example of the priority mode selection screen displayed on the operation terminal according to the embodiment of the present invention.
FIG. 14 is a flowchart illustrating an example of steps of a route setting process executed by the autonomous traveling system according to the embodiment of the present invention.
FIG. 15 is a diagram illustrating an example of a traveling screen displayed on the operation terminal according to the embodiment of the present invention.
FIG. 16A is a diagram illustrating another example of the turning method of the work vehicle according to the embodiment of the present invention.
FIG. 16B is a diagram illustrating another example of the turning method of the work vehicle according to the embodiment of the present invention.

### DESCRIPTION OF EMBODIMENTS

Embodiments below are examples that embody the present invention and are not intended to limit the technical scope of the present invention.

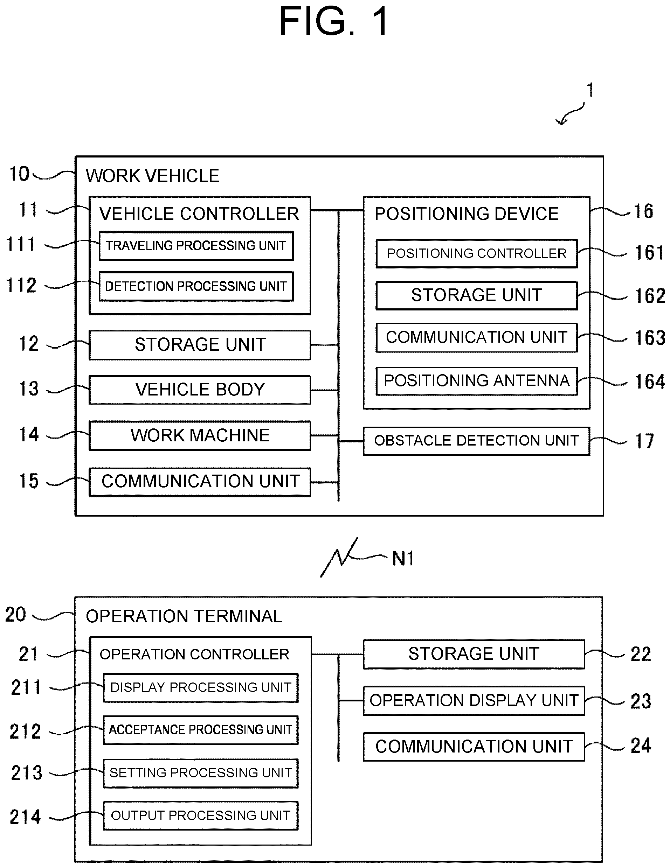

As illustrated in FIG. 1, an autonomous traveling system 1 according to an embodiment of the present invention includes a work vehicle 10 and an operation terminal 20. The work vehicle 10 and the operation terminal 20 may communicate with each other via a communication network N1. For example, the work vehicle 10 and the operation terminal 20 may communicate with each other via a mobile phone line network, a packet line network, or a wireless LAN.

In the example described according to the present embodiment, the work vehicle 10 is a rice transplanter. According to another embodiment, the work vehicle 10 may be a tractor, combine, construction machine, snowplow, etc. The work vehicle 10 is an autonomous traveling vehicle having a configuration that enables autonomous traveling (autonomic traveling) within a previously registered field. For example, an operator (user) registers a field, which is a work target, and sets a traveling route (target route) along which the work vehicle 10 autonomously travels in the field. The work vehicle 10 autonomously travels in accordance with a target route previously set for the field based on the position information of the current position of the work vehicle 10 calculated by a positioning device 16. Further, the work vehicle 10 may perform a predetermined work (e.g., planting) while autonomously traveling in the field.

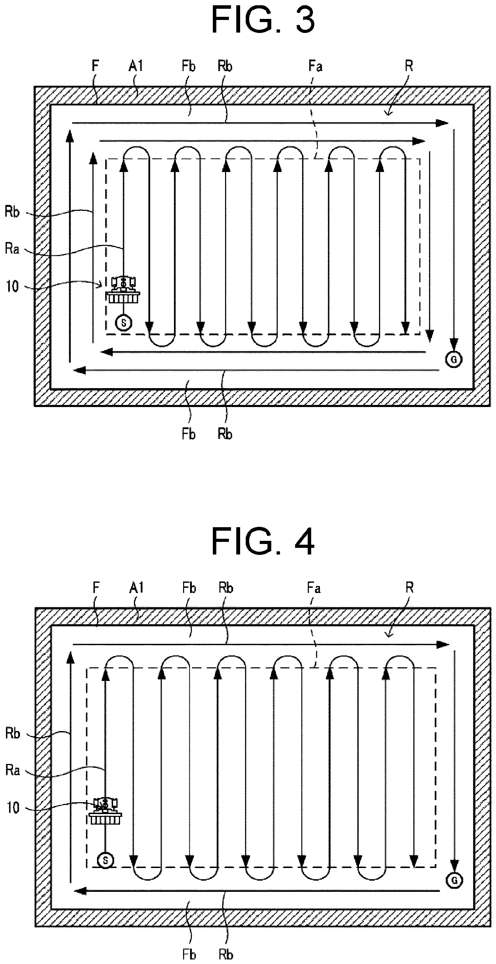

For example, the work vehicle 10 autonomously travels in accordance with a target route R in a field F illustrated in FIG. 3. The field F illustrated in FIG. 3 includes an inner area Fa and a headland area Fb (outer area), and a mound A1 (such as a bank) is formed around the outer side of the field F. The target route R including a plurality of work routes is previously set for the field F. For example, a work route Ra for traveling back and forth in a parallel manner from a work start position S is set for the inner area Fa, and a work route Rb for traveling in a spiral manner (traveling for a lap) around the outer periphery toward a work end position G is set for the headland area Fb.

The work vehicle 10 starts to autonomously travel from the work start position S and performs a work while traveling back and forth along the work route Ra in the inner area Fa. Further, the work vehicle 10 performs a work in the headland area Fb while traveling for a lap to the work end position G in accordance with the work route Rb.

Here, the work route Rb in the headland area Fb is set based on the number of work paths. FIG. 3 illustrates the work route Rb when the number of work paths is two, and FIG. 4 illustrates the work route Rb when the number of work paths is one. In the work route Rb illustrated in FIG. 3, the work vehicle 10 performs a work while traveling only two laps in the headland area Fb. In the work route Rb illustrated in FIG. 4, the work vehicle 10 performs a work while traveling only one lap in the headland area Fb. The width of the headland area Fb is set to a width corresponding to the number of work paths. Therefore, when the number of work paths is two (see FIG. 3), the width of the headland area Fb is substantially twice the working width of the work vehicle 10, and when the number of work paths is one (see FIG. 4), the width of the headland area Fb is substantially identical to the working width of the work vehicle 10.

Similarly, the width of the inner area Fa is set to the width corresponding to the number of work paths described above. Thus, when the number of work paths is two (see FIG. 3), the width of the inner area Fa is the width obtained by subtracting the length substantially four times the working width of the work vehicle 10 from the width of the field F, and when the number of work paths is one (see FIG. 4), the width of the inner area Fa is the width obtained by subtracting the length substantially twice the working width of the work vehicle 10 from the width of the field F. In the case of the target route R illustrated in FIG. 4, as compared with the target route R illustrated in FIG. 3, the work vehicle 10 turns close to the outer periphery edge (the mound A1) of the field F when moving to the adjacent work route Ra.

The target route R is not limited to the routes illustrated in FIGS. 3 and 4, and is set as appropriate in accordance with the shape of the field F, the content of the work, etc. For example, the target route R is set as appropriate in accordance with the number of work paths in the headland area Fb or the width of the headland area Fb.

Further, according to a conventional technology, the turning method is set uniformly for the field, and therefore it is difficult to set the turning method in accordance with the position in the field. This makes it difficult to set the turning route in response to the need of the operator in consideration of the condition of the field, the work efficiency, etc. In contrast, the autonomous traveling system 1 according to the present embodiment may set the turning route in response to the need of the operator, for example, use a different turning method in accordance with the position in the field, as described below.

### [Work Vehicle 10]

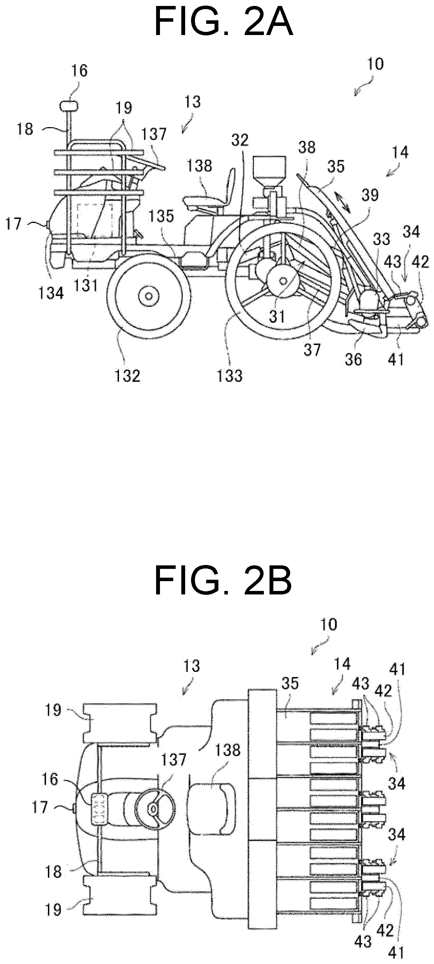

As illustrated in FIGS. 1 and 2, the work vehicle 10 includes a vehicle controller 11, a storage unit 12, a vehicle body 13, a work machine 14, a communication unit 15, a positioning device 16, an obstacle detection unit 17, etc. The vehicle controller 11 is electrically connected to the storage unit 12, the vehicle body 13, the work machine 14, the positioning device 16, the obstacle detection unit 17, etc. Further, the vehicle controller 11 and the positioning device 16 may perform wireless communications.

First, a rice transplanter, which is one example of the work vehicle 10, will be described with reference to FIGS. 2A and 2B. FIG. 2A is a side view of the work vehicle 10 (rice transplanter), and FIG. 2B is a plan view of the work vehicle 10. The work vehicle 10 includes the vehicle body 13, a pair of right and left front wheels 132, a pair of right and left rear wheels 133, the work machine 14 (planting unit), etc.

An engine (drive unit) 131 is provided inside a hood 134 provided in a front portion of the vehicle body 13. The power generated by the engine 131 is transmitted to the front wheels 132 and the rear wheels 133 via a transmission case 135. The power, which has been transmitted via the transmission case 135, is also transmitted to the work machine 14 via a PTO shaft 37 provided in a rear portion of the vehicle body 13. Further, it is configured such that the power is transmitted to the PTO shaft 37 via a planting clutch (working clutch) (not illustrated). At a position between the front wheels 132 and the rear wheels 133 in the front-rear direction of the vehicle body 13, there is a driver's seat 138 where the operator sits.

Operating tools such as a steering wheel 137, a primary gear lever (not illustrated), and a planting clutch lever (not illustrated) are provided in front of the driver's seat 138. The steering wheel 137 is an operating tool for changing the steering angle of the work vehicle 10. The primary gear lever is configured to select at least "forward", "backward", and "seedling transfer" positions. When the primary gear lever is operated to the "forward" position, the power is transmitted so that the front wheels 132 and the rear wheels 133 rotate in a direction that causes the work vehicle 10 to move forward. When the primary gear lever is operated to the "backward" position, the power is transmitted so that the front wheels 132 and the rear wheels 133 rotate in a direction that causes the work vehicle 10 to move backward. When the primary gear lever is operated to the "seedling transfer" position, the transmission of the power to the front wheels 132, the rear wheels 133, and the PTO shaft 37 is cut off. Furthermore, the planting clutch lever may be operated to switch between a transmission state where the planting clutch transmits the power to the PTO shaft 37 (i.e., the work machine 14) and a cut-off state where the planting clutch does not transmit the power to the PTO shaft 37 (i.e., the work machine 14).

The work machine 14 is coupled to the rear portion of the vehicle body 13 via an elevating link mechanism 31. The elevating link mechanism 31 includes a parallel link structure including a top link 39, a lower link 38, etc. An elevating cylinder (elevating device) 32 is coupled to the lower link 38. The entire work machine 14 may be vertically elevated by extending and contracting the elevating cylinder 32. This may change the height of the work machine 14 between a lowering position where the work machine 14 is lowered to perform a planting work and a raising position where the work machine 14 is raised not to perform a planting work. Further, the elevating cylinder 32 is a hydraulic cylinder, but may also use an electric cylinder. Moreover, it may be configured such that the work machine 14 is elevated by an actuator other than a cylinder.

The work machine 14 (planting unit) includes a planting input case 33, a plurality of planting units 34, a seedling stand 35, a plurality of floats 36, etc.

Each of the planting units 34 includes a planting transmission case 41 and a rotary case 42. The power is transmitted to the planting transmission case 41 via the PTO shaft 37 and the planting input case 33. Each of the planting transmission cases 41 has the rotary case 42 mounted on both sides thereof in a vehicle width direction. Two planting claws 43 are mounted on each of the rotary cases 42 so as to be arranged in parallel in the traveling direction of the work vehicle 10. The two planting claws 43 perform planting for one row.

As illustrated in FIG. 2A, the seedling stand 35 is provided in front of and above the planting unit 34 and is configured so as to load seedling mats thereon. The seedling stand 35 is configured so as to move for horizontal feeding in a reciprocating manner (slidable in a horizontal direction). Further, the seedling stand 35 is configured so as to carry out vertical conveying of seedling mats intermittently and downward by reciprocating movement ends of the seedling stand 35. This configuration enables the seedling stand 35 to supply seedlings from the seedling mats to each of the planting units 34. Accordingly, the work vehicle 10 may sequentially supply seedlings to each of the planting units 34 to continuously perform planting of the seedlings.

The float 36 illustrated in FIG. 2A is provided in a lower portion of the work machine 14 so that the lower surface thereof is provided so as to come into contact with the ground. The float 36 comes into contact with the ground to level the rice field surface before seedlings are planted. Further, the float 36 includes a float sensor (not illustrated) that detects the swing angle of the float 36. The swing angle of the float 36 corresponds to the distance between the rice field surface and the work machine 14. The work vehicle 10 causes the elevating cylinder 32 to activate based on the swing angle of the float 36 and elevates the work machine 14 vertically so as to keep a ground height of the work machine 14 at a constant level.

A spare seedling stand 19 is provided outside of the hood 134 in the vehicle width direction so as to load a seedling box housing spare mat seedlings. The upper portions of the pair of right and left spare seedling stands 19 are coupled to each other with a coupling frame 18 extending in the vertical direction and the vehicle width direction. The positioning device 16 is provided in the center of the coupling frame 18 in the vehicle width direction. A positioning controller 161, a storage unit 162, a communication unit 163, and a positioning antenna 164 (see FIG. 1) are provided inside the positioning device 16. The positioning antenna 164 may receive radio waves from a positioning satellite included in the satellite positioning system (GNSS). Based on the radio waves, known positioning calculation is performed so as to acquire the position of the work vehicle 10.

The obstacle detection unit 17 is provided in front of the vehicle body 13. The obstacle detection unit 17 includes a sensor that detects obstacles in a predetermined detection area by using, for example, infrared rays or ultrasonic waves. For example, the obstacle detection unit 17 may be a lidar sensor (distance sensor) that may measure the distance to the measurement target (obstacle) in three dimensions by using a laser, or a sonar sensor including a plurality of sonars that may measure the distance to the measurement target by using ultrasonic waves. The obstacle described above is, for example, the mound Al, water inlet, electric pole, materials temporarily placed in the field F, people, etc. When detecting the obstacle, the obstacle detection unit 17 transmits a detection result (measurement information) to the vehicle controller 11. The vehicle controller 11 decelerates or stops the work vehicle 10 when the obstacle detection unit 17 detects an obstacle in a detection area. Further, the obstacle detection units 17 may be provided in the front, rear, left side, and right side, respectively. In this case, the vehicle controller 11 controls the traveling of the work vehicle 10 based on the detection result of each of the obstacle detection units 17.

The storage unit 12 is a non-volatile storage unit such as a hard disk drive (HDD) or a solid state drive (SSD) that stores various types of information. The storage unit 12 stores control programs such as an autonomous traveling program for causing the vehicle controller 11 to execute an autonomous traveling process. For example, the autonomous traveling program is recorded in a computer-readable recording medium such as a flash ROM, an EEPROM, a CD, or a DVD in a non-transitory manner, and is read by a predetermined reading device (not illustrated) to be stored in the storage unit 12. Furthermore, the autonomous traveling program may be downloaded from a server (not illustrated) to the work vehicle 10 via the communication network N1 to be stored in the storage unit 12. Further, the storage unit 12 may store route data on the target route R generated in the operation terminal 20.

The vehicle controller 11 includes control devices such as a CPU, a ROM, and a RAM. The CPU is a processor that executes various arithmetic processes. The ROM is a non-volatile storage unit that previously stores control programs, such as BIOS and OS, to cause the CPU to execute various arithmetic processes. The RAM is a volatile or non-volatile storage unit that stores various types of information and is used as a temporary storage memory (work area) for various processes executed by the CPU. Further, the vehicle controller 11 causes the CPU to execute various types of control programs previously stored in the ROM or the storage unit 12 to control the work vehicle 10.

The vehicle controller 11 controls the action of the work vehicle 10 in accordance with various user operations with respect to the work vehicle 10. Further, the vehicle controller 11 performs an autonomous traveling process of the work vehicle 10 based on the current position of the work vehicle 10 calculated by the positioning device 16 and the previously set target route R.

As illustrated in FIG. 1, the vehicle controller 11 includes various processing units such as a traveling processing unit 111 and a detection processing unit 112. Further, the vehicle controller 11 causes the CPU to execute various processes in accordance with the autonomous traveling program to function as the various processing units. Further, some or all of the processing units may be configured by electronic circuits. Moreover, the autonomous traveling program may be a program for causing a plurality of processors to function as the processing units.

The traveling processing unit 111 controls traveling of the work vehicle 10. Specifically, the traveling processing unit 111 causes the work vehicle 10 to autonomously travel in accordance with the target route R set in the field F. For example, the traveling processing unit 111 starts autonomous traveling of the work vehicle 10 when acquiring a traveling start instruction from the operation terminal 20. For example, when the operator presses a start button on an operation screen of the operation terminal 20 in a case where the current position of the work vehicle 10 is the position that satisfies a traveling start condition, the operation terminal 20 outputs a traveling start instruction to the work vehicle 10. When acquiring the above-described traveling start instruction from the operation terminal 20, the traveling processing unit 111 starts autonomous traveling in accordance with the target route R.

Furthermore, when acquiring a traveling stop instruction from the operation terminal 20, the traveling processing unit 111 stops the autonomous traveling of the work vehicle 10. For example, when the operator presses a temporary stop button on the operation screen of the operation terminal 20, the operation terminal 20 outputs a traveling stop instruction to the work vehicle 10.

Further, the traveling processing unit 111 controls the traveling of the work vehicle 10 based on a detection result by the obstacle detection unit 17.

The detection processing unit 112 acquires a detection result (measurement information) from the obstacle detection unit 17. Furthermore, the detection processing unit 112 detects an obstacle located on the outer periphery of the field F while the work vehicle 10 travels along the target route R in the outer periphery area (the headland area Fb) of the field F. Specifically, the detection processing unit 112 acquires the measurement information on the detection area from the obstacle detection unit 17. For example, when an obstacle enters the detection area, the detection processing unit 112 acquires the measurement distance (the distance from the obstacle detection unit 17 to the obstacle) measured by the obstacle detection unit 17. Further, the detection processing unit 112 specifies the position and shape of the obstacle based on the above-described measurement information. The detection processing unit 112 may be included in a different device (detection device) than the vehicle controller 11. The detection device may be configured to include the obstacle detection unit 17 and the detection processing unit 112. Further, the detection processing unit 112 may also detect the inclination, misalignment, etc. of the vehicle body based on the detection result of a sensor (not illustrated) mounted on the work vehicle 10.

The traveling processing unit 111 controls the autonomous traveling of the work vehicle 10 based on the detection result of the detection processing unit 112. Specifically, when the detection processing unit 112 detects the obstacle, inclination, or misalignment, the traveling processing unit 111 decelerates or stops the work vehicle 10. Further, the traveling processing unit 111 may also cause the work vehicle 10 to perform avoidance traveling to avoid the obstacle.

### [Operation Terminal 20]

As illustrated in FIG. 1, the operation terminal 20 is an information processing device including an operation controller 21, a storage unit 22, an operation display unit 23, a communication unit 24, etc. The operation terminal 20 may include a portable terminal such as a tablet terminal or a smartphone.

The communication unit 24 is a communication interface that connects the operation terminal 20 to the communication network N1 via a wire or wirelessly and performs data communications with one or more external devices, such as the work vehicles 10, via the communication network N1 in accordance with a predetermined communication protocol.

The operation display unit 23 is a user interface including a display unit, such as a liquid crystal display or an organic EL display, which displays various types of information, and an operation unit, such as a touch panel, a mouse, or a keyboard, which accepts operations. On an operation screen displayed on the display unit, the operator may operate the operation unit to register various types of information (such as work vehicle information, field information, and work information described below). For example, the operator performs an operation to register the field F, which is the work target, in the operation unit.

Furthermore, the operator may operate the operation unit to give a traveling start instruction, a traveling stop instruction, or the like, to the work vehicle 10. Furthermore, in a place away from the work vehicle 10, the operator may use the traveling trajectory displayed on the operation terminal 20 to grasp the traveling state of the work vehicle 10 autonomously traveling in the field F along the target route R.

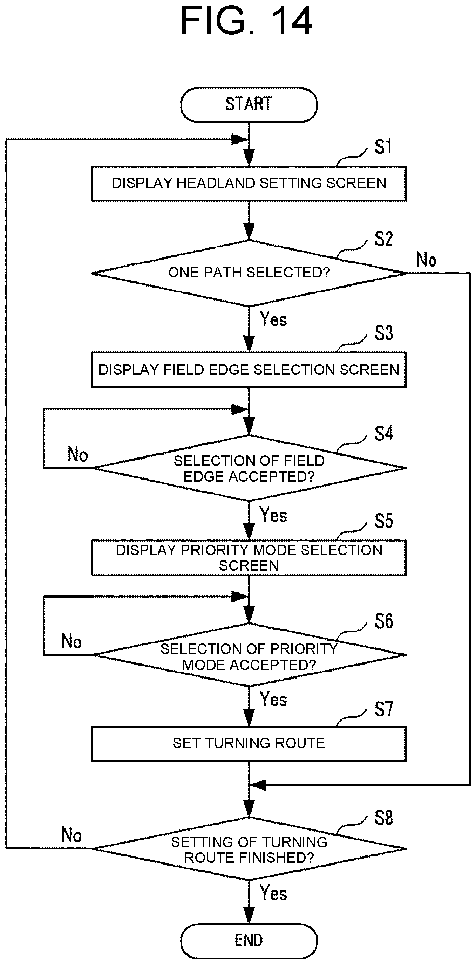

The storage unit 22 is a non-volatile storage unit such as an HDD or an SSD that stores various types of information. The storage unit 22 stores control programs such as a route setting program to cause the operation controller 21 to execute a route setting process (see FIG. 14) described below. For example, the route setting program is recorded in a computer-readable recording medium such as a flash ROM, an EEPROM, a CD, or a DVD in a non-transitory manner and is read by a predetermined reading device (not illustrated) to be stored in the storage unit 22. Further, the above-described route setting program may be downloaded from a server (not illustrated) to the operation terminal 20 via the communication network N1 to be stored in the storage unit 22.

Furthermore, a dedicated application for causing the work vehicle 10 to autonomously travel is installed in the storage unit 22. The operation controller 21 activates the dedicated application to perform the process to set various types of information with regard to the work vehicle 10, the process to generate the target route R for the work vehicle 10, an autonomous traveling instruction for the work vehicle 10, etc.

Furthermore, the storage unit 22 stores data such as the work vehicle information that is information with regard to the work vehicle 10 and the target route information that is information with regard to the target route R. The work vehicle information includes information such as a vehicle number and a vehicle model for each of the work vehicles 10. The vehicle number is identification information on the work vehicle 10. The vehicle model is a model of the work vehicle 10.

Furthermore, the storage unit 22 may store the work vehicle information with regard to the one work vehicle 10 or may store the work vehicle information with regard to the work vehicles 10. For example, in a case where a particular operator owns the work vehicles 10, the storage unit 22 stores the work vehicle information with regard to each of the work vehicles 10.

The target route information includes information such as route name, field name, address, field size, and working time for each of the target routes R. The route name is the route name of the target route R generated by the operation terminal 20. The field name is the name of the field F that is the work target for which the target route R is set. The address is the address of the field F, and the field size is the size of the field F. The working time is the time it takes for the work vehicle 10 to do a work in the field F.

Further, the storage unit 22 may store the target route information with regard to the one target route R or may store the target route information with regard to the target routes R. For example, in a case where a particular operator generates the target routes R for the one or more fields F owned by the operator, the storage unit 22 stores the target route information with regard to each of the target routes R. Further, the one target route R or the target routes R may be set for the one field F.

Further, according to another embodiment, some or all of the information such as the work vehicle information and the target route information may be stored in a server accessible from the operation terminal 20. The operator may perform the operation to register the work vehicle information and the target route information in the server (e.g., a personal computer or a cloud server).

The operation controller 21 has control devices such as a CPU, a ROM, and a RAM. The CPU is a processor that executes various arithmetic processes. The ROM is a non-volatile storage unit that previously stores control programs, such as BIOS and OS, to cause the CPU to execute various arithmetic processes. The RAM is a volatile or non-volatile storage unit that stores various types of information and is used as a temporary storage memory for various types of processing executed by the CPU. Further, the operation controller 21 causes the CPU to execute various control programs previously stored in the ROM or the storage unit 22 to control the operation terminal 20.

As illustrated in FIG. 1, the operation controller 21 includes various processing units such as a display processing unit 211, an acceptance processing unit 212, a setting processing unit 213, and an output processing unit 214. Furthermore, the operation controller 21 causes the CPU to execute various processes in accordance with the control programs to function as the various processing units. Further, some or all of the processing units may be configured by electronic circuits. Moreover, the control program may be a program that causes a plurality of processors to function as the processing units.

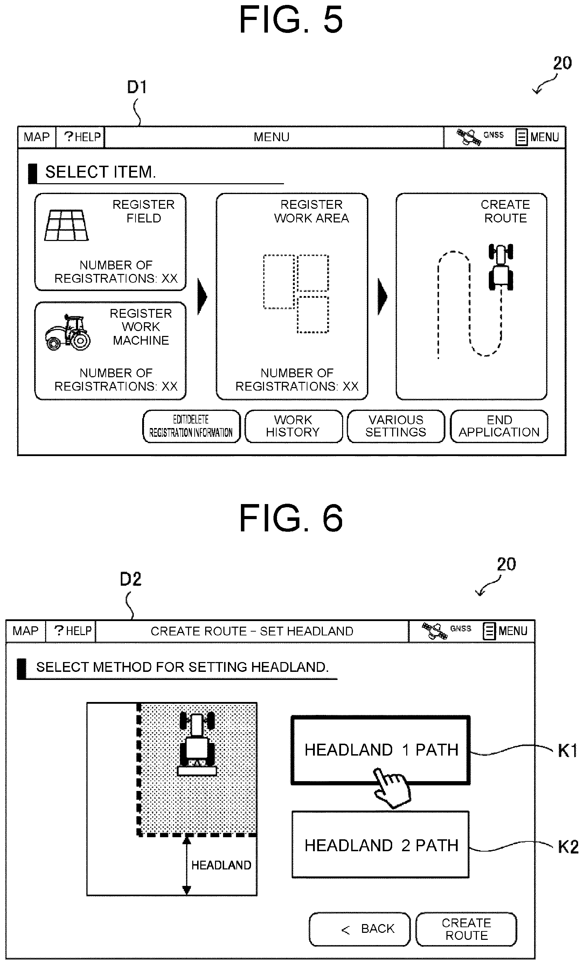

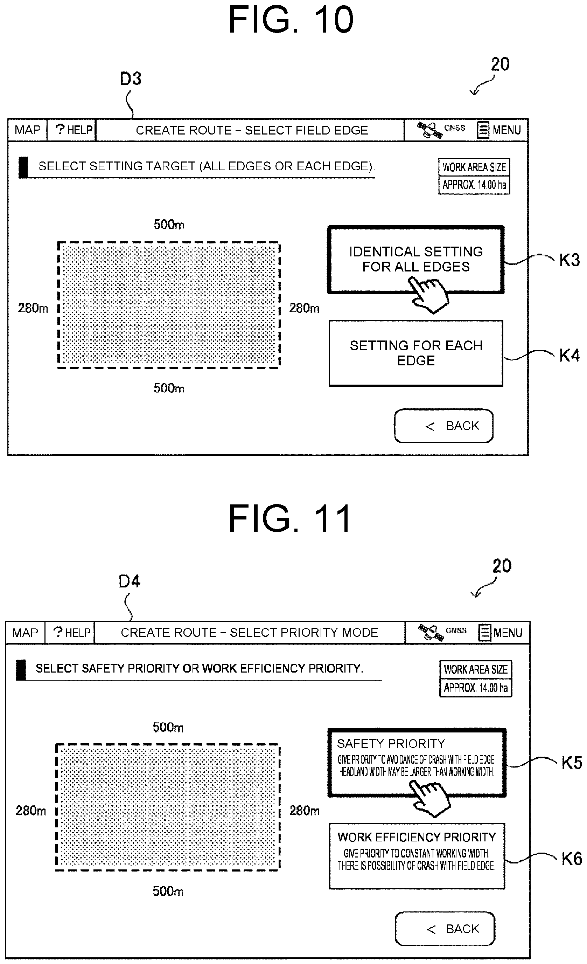

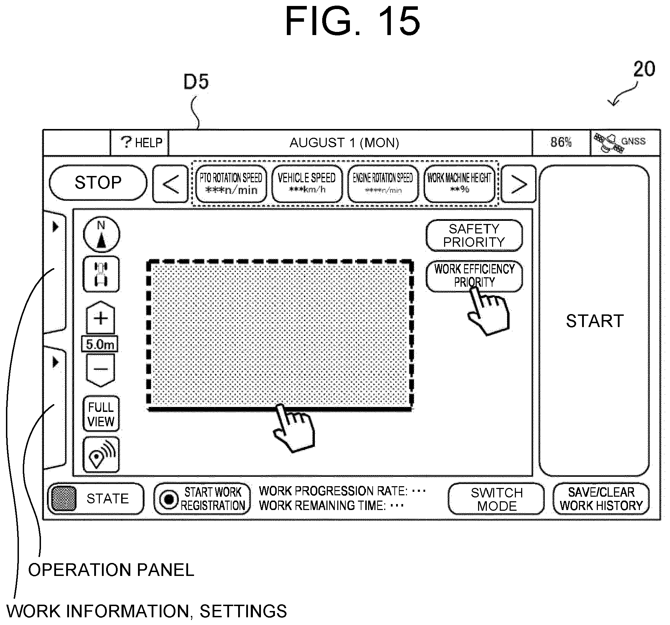

The display processing unit 211 causes the operation display unit 23 to display various operation screens. For example, the display processing unit 211 causes the operation display unit 23 to display various operation screens, such as a menu screen D1 (see FIG. 5), a headland setting screen D2 (see FIG. 6), a field edge selection screen D3 (see FIG. 10), a priority mode selection screen D4 (see FIGS. 11 to 13), and a traveling screen D5 (see FIG. 15).

The acceptance processing unit 212 accepts operator operations (user operations) on each of the above-described operation screens. For example, on the menu screen D1 (see FIG. 5), the acceptance processing unit 212 accepts operations to press a "Register field" button selected to register a field, a "Register work machine" button selected to register a work machine, a "Register work area" button selected to register a work area, and a "Create route" button selected to generate a target route.

The setting processing unit 213 registers each piece of setting information based on the setting operations of the operator for the items ("Register field", "Register work machine", "Register work area", and "Create route") selected by the operator. For example, the setting processing unit 213 sets information about the work vehicle 10 (hereinafter referred to as "work vehicle information"), information about the field F (hereinafter referred to as "field information"), information about how the work is performed in detail (hereinafter referred to as "work information"), etc.

Specifically, with regard to information such as the model of the work vehicle 10, the position where the positioning antenna 164 is mounted in the work vehicle 10, the type of the work machine 14, the size and shape of the work machine 14, the position of the work machine 14 relative to the work vehicle 10, the traveling speed and the engine speed of the work vehicle 10 during work, and the traveling speed and the engine speed of the work vehicle 10 during turning, the setting processing unit 213 sets the information in response to a registration operation of the operator.

Furthermore, with regard to information such as the position and shape of the field F, the work start position S to start a work, the work end position G to end a work, and the work direction, the setting processing unit 213 sets the information in response to a registration operation of the operator.

For example, the operator rides on the work vehicle 10, drives the work vehicle 10 to travel one lap around the outer periphery of the field F, and records the transition of the position information of the positioning antenna 164 at that time so that the information about the position and shape of the field F may be automatically acquired. Furthermore, the position and shape of the field F may also be acquired based on the polygon obtained by operating the operation terminal 20 by the operator in a state where a map is displayed on the operation terminal 20 and designating a plurality of points on the map. The area specified by the acquired position and shape of the field F is an area (traveling area) where the work vehicle 10 may travel.

Further, the setting processing unit 213 is configured so as to set, as the work information, the presence or absence of a cooperative work by the work vehicle 10 (unmanned tractor) and the manned work vehicle 10, a skip number that is the number of work routes to be skipped in a case where the work vehicle 10 turns in the headland, the width of the headland, the width of a non-cultivated field, or the like.

For example, the setting processing unit 213 sets the work area where a work is actually performed in the registered field F. For example, when the operator selects "Register work area" on the menu screen D1 (see FIG. 5) and selects the field F to be registered as the work area, the acceptance processing unit 212 accepts the selection operation, and the setting processing unit 213 displays a registration screen (map screen) to register the work start position S and the work end position G. The operator registers the work start position S and the work end position G at any position in the field F on the above-described registration screen.

Furthermore, for setting the work area, the setting processing unit 213 makes settings related to a headland and a turning route. Specific examples will be described below.

For example, for setting the work area, the display processing unit 211 displays the headland setting screen D2 illustrated in FIG. 6. On the headland setting screen D2, the display processing unit 211 selectively displays the number of work paths (the number of laps) of the headland area Fb. For example, the display processing unit 211 selectively displays a setting button K1 to set the number of work paths in the headland area Fb to "one path" (see FIG. 4) and a setting button K2 to set the number of work paths in the headland area Fb to "two paths" (see FIG. 3).

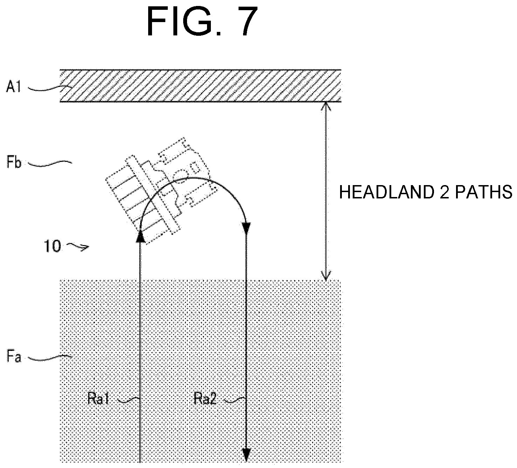

The operator may select either "one path" or "two paths" for the work path in the headland area Fb on the headland setting screen D2. The acceptance processing unit 212 accepts, from the operator, an operation (corresponding to a second user operation according to the present invention) to select the number of work paths (the number of laps) in the headland area Fb. Further, when the number of work paths in the headland area Fb is set to "two paths", the width of the headland area Fb is the width corresponding to the two paths, i.e., the length substantially twice the working width, as illustrated in for example FIG. 7. In this case, the headland area Fb may provide a sufficient turning width for the work vehicle 10 to move from a work route Ra1 to a subsequent work route Ra2. This allows the work vehicle 10 to continuously travel forward and turn without traveling backward after performing a work on the work route Ra 1.

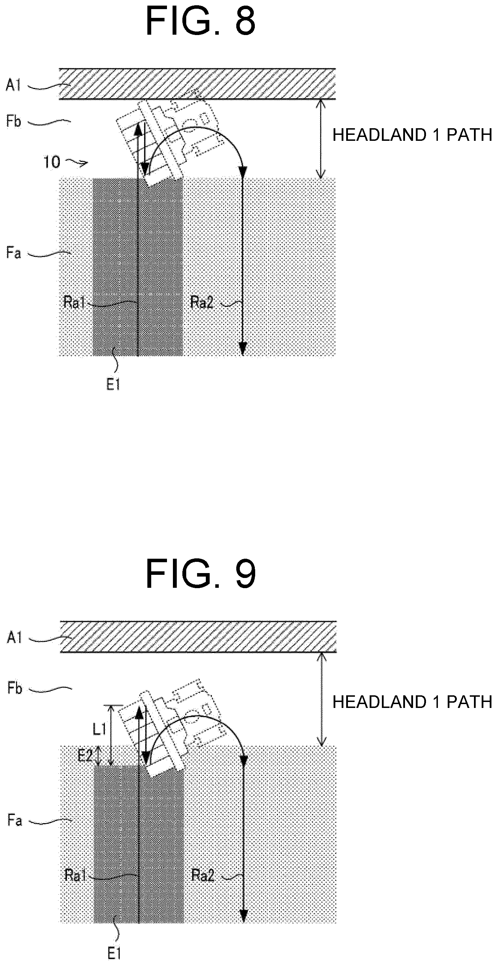

Conversely, when the number of work paths in the headland area Fb is set to "one path", the width of the headland area Fb is the width corresponding to one path, i.e., the length substantially the same as the working width, as illustrated in for example FIG. 8. In this case, the headland area Fb makes it difficult to provide a sufficient turning width for the work vehicle 10 to move from the work route Ra1 to the subsequent work route Ra2. Therefore, the work vehicle 10 needs to travel backward for a predetermined distance after performing a work on the work route Ra 1 and then travel forward and turn.

However, as illustrated in FIG. 8, for example, when the work vehicle 10 performs a work to an end portion of the inner area Fa so that there is no unworked area (remaining work) in the inner area Fa, the turning start position after traveling backward is near the end portion of the inner area Fa, and therefore there is a possibility that the work vehicle 10 moves out of the field F and moves over the mound A1 during turning. Further, the reference mark E1 in FIG. 8 indicates a worked area in the work route Ra. Conversely, as illustrated in FIG. 9, for example, when the straight distance (a distance L1 in FIG. 9) of the work route Ra1 is shortened so that the work vehicle 10 does not move out of the field F when traveling straight and turning, i.e., when the work vehicle 10 finishes working before the end portion of the inner area Fa, the turning start position after traveling backward is before the end portion of the inner area Fa, and therefore there is an unworked area E2 in the inner area Fa.

As described above, when the number of work paths in the headland area Fb is set to "one path", it is difficult to provide a sufficient width (turning area) needed for turning in the headland area Fb, and therefore safety during turning is reduced according to a turning method (see FIG. 8) that gives a priority to the work efficiency, and there is an unworked area according to a turning method (see FIG. 9) that gives a priority to safety during turning.

Therefore, the present embodiment provides the configuration that allows the operator to set the desired turning method for each work path. For example, when the operator desires to give a priority to the work efficiency with the work vehicle 10, the work vehicle 10 turns according to the turning method illustrated in FIG. 8. Conversely, when the operator desires safe turning of the work vehicle 10, i.e., gives a priority to safety of turning of the work vehicle 10, the work vehicle 10 turns according to the turning method illustrated in FIG. 9.

Furthermore, the turning route according to the turning method that gives a priority to safety illustrated in FIG. 9 is a route (corresponding to a first turning route according to the present invention) that enables safe turning of the work vehicle 10 by adjusting (for example, shortening) the route length of the work route in the inner area Fa although there is a possibility that the width (headland width) of the headland area Fb is not the working width, and the turning route according to the turning method that gives a priority to work efficiency illustrated in FIG. 8 is a route (corresponding to a second turning route according to the present invention) in which the headland width substantially matches the working width by maintaining the route length of the work route in the inner area Fa although there is a possibility that the work vehicle 10 moves over the mound, or the like. For example, the turning route according to the turning method that gives a priority to safety is a route in which the work vehicle 10 turns in the headland area Fb having a first predetermined width (e.g., a width wider than the working width), and the turning route according to the turning method that gives a priority to work efficiency is a route in which the work vehicle 10 turns in the headland area Fb having a second predetermined width (e.g., the same width as the working width) narrower than the first predetermined width. Furthermore, for example, the turning route according to the turning method that gives a priority to safety is a route in which the start point of the turning route is on the inner periphery side, while the turning route according to the turning method that gives a priority to work efficiency is a route in which the start point of the turning route is on the outer periphery side.

Specifically, when the number of work paths in the headland area Fb is set to "one path", the display processing unit 211 displays the field edge selection screen D3 illustrated in FIG. 10. On the field edge selection screen D3, the display processing unit 211 selectively displays the outer periphery edge (field edge) of the field F, for which the turning method is set. For example, the display processing unit 211 selectively displays a setting button K3 to set the identical turning method for all the outer periphery edges of the field F and a setting button K4 to set the turning method for each of the outer periphery edges of the field F.

On the field edge selection screen D3, the operator may make a selection as to whether all the outer periphery edges are collectively set or each of the outer periphery edges is individually set. When the operator selects the setting button K3, the acceptance processing unit 212 accepts the selection operation, and the display processing unit 211 displays the priority mode selection screen D4 illustrated in FIG. 11. On the priority mode selection screen D4, the display processing unit 211 selectively displays a setting button K5 corresponding to a safety priority mode (corresponding to a first turning mode according to the present invention) for setting the turning method (see FIG. 9) that gives a priority to safety during turning and a setting button K6 corresponding to a work efficiency priority mode (corresponding to a second turning mode according to the present invention) for setting the turning method (see FIG. 8) that gives a priority to work efficiency during turning.

For example, when the operator selects the safety priority mode (the setting button K5), the acceptance processing unit 212 accepts the selection operation, and the setting processing unit 213 sets the turning route illustrated in FIG. 9 for all the outer periphery edges. Accordingly, the work vehicle 10 turns in accordance with the turning route illustrated in FIG. 9 when performing a work in the field F.

Further, for example, when the operator selects the work efficiency priority mode (the setting button K6), the acceptance processing unit 212 accepts the selection operation, and the setting processing unit 213 sets the turning route illustrated in FIG. 8 for all the outer periphery edges. Accordingly, the work vehicle 10 turns in accordance with the turning route illustrated in FIG. 8 when performing a work in the field F.

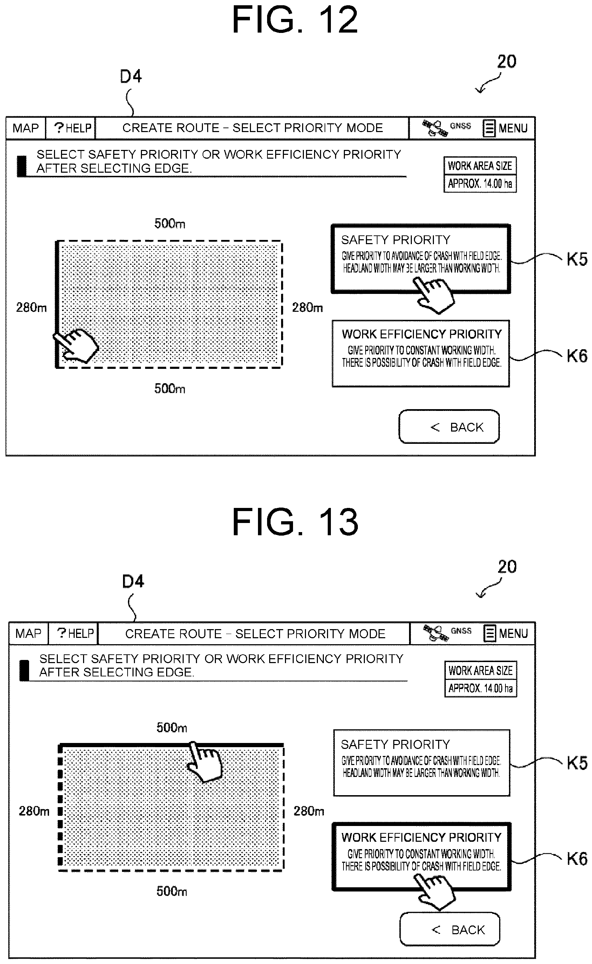

Furthermore, when the operator selects the setting button K4 on the field edge selection screen D3 illustrated in FIG. 10, the acceptance processing unit 212 accepts the selection operation, and the display processing unit 211 displays the priority mode selection screen D4 illustrated in FIG. 12. The display processing unit 211 selectively displays the setting button K5 and the setting button K6 on the priority mode selection screen D4 and also selectively displays the outer periphery edges of the field F individually. For example, in the example illustrated in FIG. 12, the operator may select each of the four edges (upper edge, lower edge, left edge, and right edge) of the field F individually on the priority mode selection screen D4.

For example, as illustrated in FIG. 12, when the operator selects the left edge of the field F and selects the safety priority mode (the setting button K5), the acceptance processing unit 212 accepts the selection operation, and the setting processing unit 213 sets the turning route illustrated in FIG. 9 for the left edge of the field F. Furthermore, as illustrated in FIG. 13, for example, when the operator selects the upper edge of the field F and selects the work efficiency priority mode (the setting button K6), the acceptance processing unit 212 accepts the selection operation, and the setting processing unit 213 sets the turning route illustrated in FIG. 8 for the upper edge of the field F.

Further, as illustrated in FIGS. 12 and 13, the display processing unit 211 displays the selected outer periphery edge in a different display form than the outer periphery edge that is not selected on the priority mode selection screen D4. Further, as illustrated in FIG. 13, the display processing unit 211 displays the outer periphery edge (left edge), for which the turning route has been set, in a discriminable manner. In the example illustrated in FIG. 13, the display processing unit 211 displays the selected upper edge in a thick solid line, the left edge, for which the turning route has been set, in a thick dotted line, and the lower edge and the right edge, which have not been selected and set, in thin dotted lines. This allows the operator to easily know the setting status of each of the outer periphery edges.

Furthermore, the display processing unit 211 may display each of the outer periphery edges in a different display form on the priority mode selection screen D4 when the turning route having a different turning method is set for each of the outer periphery edges. For example, when the safety priority mode is set for the left edge of the field F (see FIG. 12) and the work efficiency priority mode is set for the upper edge of the field F (see FIG. 13), the display processing unit 211 may display the upper edge and the left edge in different display forms on the priority mode selection screen D4.

As described above, the setting processing unit 213 sets the identical or different turning route for each of the outer periphery edges forming the field F in response to the setting operation of the operator. Further, the acceptance processing unit 212 may permit acceptance of the operation for selecting the turning route (priority mode) when a predetermined number (e.g., "one path") is selected as the number of work paths described above by the operator. Here, the predetermined number is such a number that the total working width corresponding to the predetermined number is less than the width that enables turning without traveling backward from the work route Ra1 to the work route Ra2 in the inner area Fa. For example, in a case where the area equal to or more than the working width of the work vehicle 10 is needed when the work vehicle 10 moves from the work route Ra1 to the work route Ra2, the predetermined number is set to one, and in a case where the area equal to or more than the width twice the working width of the work vehicle 10 is needed when the work vehicle 10 moves from the work route Ra1 to the work route Ra2, the predetermined number is set to two.

According to another embodiment, the setting processing unit 213 may set the identical or different turning route for each of the outer periphery edges in accordance with the state (shape, etc.) of the field F. Specifically, the setting processing unit 213 may automatically set the turning route for each of the outer periphery edges of the field F regardless of the operator's operation.

Furthermore, each of the outer periphery edges corresponds to the work path of the work vehicle 10. For example, the upper edge of the field F corresponds to the work path in the work route Ra on which the work vehicle 10 travels straight toward the upper edge direction, and the lower edge of the field F corresponds to the work path in the work route Ra on which the work vehicle 10 travels straight toward the lower edge direction. Furthermore, the left edge of the field F corresponds to the work path in the work route Ra on which the work vehicle 10 travels straight along the left edge, and the right edge of the field F corresponds to the work path in the work route Ra on which the work vehicle 10 travels straight along the right edge.

Furthermore, the upper edge of the field F corresponds to the work path in the work route Rb on which the work vehicle 10 travels straight along the upper edge, and the lower edge of the field F corresponds to the work path in the work route Rb on which the work vehicle 10 travels straight along the lower edge. Further, the left edge of the field F corresponds to the work path in the work route Rb on which the work vehicle 10 travels straight along the left edge, and the right edge of the field F corresponds to the work path in the work route Rb on which the work vehicle 10 travels straight along the right edge.

Specifically, according to the present embodiment, the setting processing unit 213 sets a predetermined turning route among a plurality of turning routes having different turning methods, for each of the work paths included in the work area where the work vehicle 10 autonomously travels in accordance with the target route.

Furthermore, the acceptance processing unit 212 accepts, from the operator, an operation (corresponding to a first user operation according to the present invention) to select a predetermined turning route from a plurality of turning routes (for example, FIGS. 8 and 9), and the setting processing unit 213 sets the turning route selected by the operation of the operator for each of the work paths. Furthermore, the setting processing unit 213 accepts the above-described operation of the operator for each of the outer periphery edges forming the field F.

Furthermore, the setting processing unit 213 sets the target route R including the turning route set for each of the work paths and the work routes Ra and Rb set corresponding to the field F. Specifically, the setting processing unit 213 generates the target route R for autonomously traveling the work vehicle 10 in the field F based on each of the pieces of setting information described above. For example, when the operator selects "Create route" on the menu screen D1 (see FIG. 5), the setting processing unit 213 displays the registration screen (not illustrated) for generating a route. On the above-described registration screen, the operator registers each piece of information such as the field F, the work machine 14, the vehicle speed, and the engine speed, and then gives a route generation instruction. When acquiring the route generation instruction, the setting processing unit 213 generates the target route R based on the work start position S, the work end position G, and each of the pieces of information described above.

For example, as illustrated in FIGS. 3 and 4, the setting processing unit 213 generates the target route R including the work start position S, the work end position G, and the work routes Ra and Rb. The setting processing unit 213 registers the generated target route R in association with the field F.

The output processing unit 214 outputs the route data on the target route R to the work vehicle 10. For example, when the operator selects the field F, which is the work target, and the work route (the target route R) and performs a work start operation, the route data on the target route R corresponding to the field F is output to the work vehicle 10.

When receiving the route data on the target route R generated by the operation terminal 20, the work vehicle 10 stores the route data in the storage unit 12. Furthermore, when the above-described traveling start condition is satisfied, the work vehicle 10 starts autonomous traveling in response to the traveling start instruction by the operator. While the work vehicle 10 autonomously travels, the operator may grasp the traveling state in the field F with the operation terminal 20.

Further, the operation terminal 20 may access a web site (agricultural support site) of an agricultural support service provided by a server (not illustrated) via the communication network N1. In this case, a browser program is executed by the operation controller 21, and therefore the operation terminal 20 may function as an operation terminal of the server. Further, the server includes each of the processing units described above and performs each process.

### [Route Setting Process]

An example of the above-described route setting process performed by the autonomous traveling system 1 will be described with reference to FIG. 14.

Furthermore, the present invention may be regarded as an invention of a route setting method for executing one or more steps included in the route setting process. Further, one or more steps included in the route setting process described here may be omitted as appropriate. Further, the order of execution of each step in the route setting process may be different to the extent that similar effects are produced. Furthermore, in the case described here, the operation controller 21 of the operation terminal 20 executes each step in the above-described route setting process, but a route setting method in which one or more processors execute each step in the route setting process in a distributed manner may also be considered as another embodiment.

First, in Step S1, the operation controller 21 causes the operation display unit 23 of the operation terminal 20 to display the headland setting screen D2 (see FIG. 6). For example, when the operator presses the "Create route" button on the menu screen D1 (see FIG. 5), the operation controller 21 displays the headland setting screen D2.

Subsequently, in Step S2, the operation controller 21 determines whether the operator has selected "one path" as the number of work paths for the headland area Fb on the headland setting screen D2 (see FIG. 6). When the operator has selected "one path" (the setting button K1) (S2: Yes), the operation controller 21 proceeds to the process in Step S3. Conversely, when the operator has selected "two paths" (the setting button K2) (S2: No), the operation controller 21 proceeds to the process in Step S8.

In Step S3, the operation controller 21 displays the field edge selection screen D3 (see FIG. 10) on the operation display unit 23. On the field edge selection screen D3, the operation controller 21 selectively displays the setting button K3 to set the identical turning method for all the outer periphery edges of the field F and the setting button K4 to set the turning method for each of the outer periphery edges of the field F.

Subsequently, in Step S4, the operation controller 21 determines whether the selection operation of the outer periphery edge has been accepted from the operator on the field edge selection screen D3 (see FIG. 10). Specifically, the operation controller 21 determines whether the selection operation of the setting button K3 or the setting button K4 has been accepted from the operator. When the selection operation has been accepted (S4: Yes), the operation controller 21 proceeds to the process in Step S5. The operation controller 21 waits until the selection operation is accepted (S4: No).

In Step S5, the operation controller 21 displays the priority mode selection screen D4 (see FIGS. 11 and 12) on the operation display unit 23. On the priority mode selection screen D4, the operation controller 21 selectively displays the setting button K5 corresponding to the safety priority mode to set the turning method (see FIG. 9) that gives a priority to safety during turning and the setting button K6 corresponding to the work efficiency priority mode to set the turning method (see FIG. 8) that gives a priority to work efficiency during turning. Furthermore, in Step S4, the operation controller 21 displays the priority mode selection screen D4 illustrated in FIG. 11 when accepting the selection operation of the setting button K3 from the operator, and displays the priority mode selection screen D4 illustrated in FIG. 12 when accepting the selection operation of the setting button K4 from the operator.

Subsequently, in Step S6, the operation controller 21 determines whether the selection operation of the priority mode has been accepted from the operator on the priority mode selection screen D4 (see FIGS. 11 and 12). Specifically, the operation controller 21 determines whether the selection operation of the setting button K5 or the setting button K6 has been accepted from the operator. When the selection operation has been accepted (S6: Yes), the operation controller 21 proceeds to the process in Step S7. The operation controller 21 waits until the selection operation is accepted (S6: No). Furthermore, on the priority mode selection screen D4 illustrated in FIG. 12, the operation controller 21 accepts the selection operation of the priority mode from the operator for each outer periphery edge.

In Step S7, the operation controller 21 sets the turning route. For example, when the operator selects "Identical setting for all edges" (the setting button K3) on the field edge selection screen D3 (see FIG. 10) and presses "Safety priority" (the setting button K5) on the priority mode selection screen D4 (see FIG. 11), the operation controller 21 sets the turning route illustrated in FIG. 9 (e.g., the turning route having a shorter route length of the work route Ra1, or the turning route having the start point of the turning route on the inner periphery side (the first turning route)) for all the outer periphery edges of the field F.

Furthermore, for example, when the operator selects "Identical setting for all edges" (the setting button K3) on the field edge selection screen D3 and presses "Work efficiency priority" (the setting button K6) on the priority mode selection screen D4, the operation controller 21 sets the turning route illustrated in FIG. 8 (for example, the turning route having the maintained route length of the work route Ra1, or the turning route having the start point of the turning route on the outer periphery side (the second turning route)) for all the outer periphery edges of the field F.

Furthermore, for example, when the operator selects "Setting for each edge" (the setting button K4) on the field edge selection screen D3 and selects the outer periphery edge on the priority mode selection screen D4, and presses "Safety priority" (the setting button K5) (see FIG. 12), the operation controller 21 sets the turning route (the first turning route) illustrated in FIG. 9 for the outer periphery edge.

Furthermore, for example, when the operator selects "Setting for each edge" (the setting button K4) on the field edge selection screen D3, selects the outer periphery edge on the priority mode selection screen D4, and presses "Work efficiency priority" (the setting button K6) (see FIG. 13), the operation controller 21 sets the turning route (the second turning route) illustrated in FIG. 8 for the outer periphery edge.

Furthermore, when the turning route is set for each outer periphery edge, the operation controller 21 displays the selected outer periphery edge, the unselected outer periphery edge, and the set outer periphery edge in different display forms on the priority mode selection screen D4 (see FIG. 13). Further, when the turning route having a different turning method is set for each of the outer periphery edges, the operation controller 21 may display each of the outer periphery edges in a different display form for each set turning route.

Subsequently, in Step S8, the operation controller 21 determines whether the process of setting the turning route in the field F has finished. When the turning route in the field F has been registered, the operation controller 21 determines that the turning route setting process has finished (S8: Yes) and terminates the route setting process described above. When the turning route in the field F has not been registered, the operation controller 21 determines that the turning route setting process has not been finished (S8: No) and returns to the process in Step S1.

When the process of setting the turning route in the field F described above has finished, the operation controller 21 sets the target route R including the turning route and the work routes Ra and Rb set for the field F. Furthermore, the operation controller 21 outputs the route data on the set target route R to the work vehicle 10. Accordingly, the work vehicle 10 executes the autonomous traveling process in accordance with the target route R.

As described above, the autonomous traveling system 1 according to the present embodiment sets a predetermined turning route among a plurality of turning routes having different turning methods, for each of a plurality of work paths included in the field F (work area) where the work vehicle 10 autonomously travels in accordance with the target route R and sets the target route R including the turning route set for each of the work paths and the work routes Ra and Rb set corresponding to the field F.

With the above configuration, for example, different turning routes may be set in accordance with the outer periphery edge of the field F, and different turning routes may be set as the turning route during traveling in the inner area Fa and the turning route during traveling in the headland area Fb. Furthermore, a different turning route may be set for each of the work routes in the inner area Fa, or a different turning route may be set for each of the work routes (circumferential routes) in the headland area Fb. As described above, the turning method of the work vehicle 10 may be set in accordance with the state of the field F and the state of the work route so that it is possible to set the turning route in response to the need of the operator. For example, the operator may set the turning route that gives a priority to safety during turning and the turning route that gives a priority to work efficiency. For example, when there is the sloping mound A1 on the upper edge side of the field F and the flat mound A1 on the lower edge side, the operator may set the turning route (see FIG. 9) that gives a priority to safety for the upper edge and the turning route (see FIG. 8) that gives a priority to work efficiency for the lower edge.

The embodiment of the present invention is not limited to the embodiment described above, but may be the embodiment described below.

According to another embodiment of the present invention, the operation controller 21 may permit acceptance of the operation for setting the turning route even after autonomous traveling of the work vehicle 10 starts. FIG. 15 illustrates an example of the traveling screen D5. The operation controller 21 displays the traveling screen D5 when the work vehicle 10 starts traveling autonomously. The operator may grasp the work status, and the like, on the traveling screen D5. On the traveling screen D5, the operation controller 21 accepts the selection operation of the outer periphery edge of the field F and the selection operation of "Safety priority" or "Work efficiency priority". This allows the operator to change the turning route after the work vehicle 10 starts traveling autonomously. Furthermore, in consideration of the safety of traveling of the work vehicle 10, the operation controller 21 may permit acceptance of the operation for setting the turning route on the condition that the work vehicle 10 has stopped traveling autonomously or decelerated.

Furthermore, the operation controller 21 may limit the operation for setting the turning route after the work vehicle 10 has started traveling autonomously. For example, the operation controller 21 may permit acceptance of the operation for changing the turning route only for the work route in the inner area Fa or may permit acceptance of the operation for changing the turning route for the circumferential route in the headland area Fb. Moreover, after the work vehicle 10 starts traveling autonomously, the operation controller 21 may permit a change from the work efficiency-priority turning route to the safety-priority turning route and prohibit a change from the safety-priority turning route to the work efficiency-priority turning route.

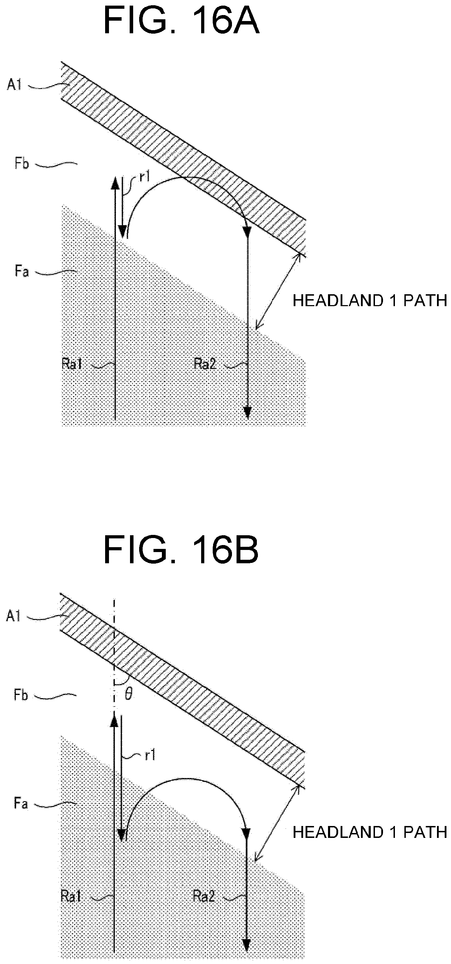

Furthermore, as illustrated in FIGS. 16A and 16B, the outer periphery edge of the field F may be inclined with respect to the work route Ra. In this case, as illustrated in FIG. 16A, the work vehicle 10 is more likely to move over the mound A1, as compared with the field F illustrated in FIG. 8. Therefore, when the priority mode is set to the safety priority mode, the operation controller 21 sets the distance of a backward route r1 after traveling straight along the work route Ra to the length corresponding to the slope angle of the outer periphery edge, as illustrated in FIG. 16B. Specifically, the operation controller 21 sets a longer distance of the backward route r1 as an angle θ (see FIG. 16B) formed between the working direction and the outer periphery edge is smaller. Thus, it is possible to provide the area where the work vehicle 10 may turn so that the work vehicle 10 may turn safely without moving out of the field F.

According to another embodiment of the present invention, the operation controller 21 may reduce the safety function of the work vehicle 10 when the work efficiency priority mode is set, as compared with the safety function of the work vehicle 10 when the safety priority mode is selected. For example, the operation controller 21 may output a control instruction to the work vehicle 10 so that the detection area of the obstacle detection unit 17 when the work efficiency priority mode is set is narrower than the detection area of the obstacle detection unit 17 when the safety priority mode is set. This may prevent a reduction in the work efficiency due to the fact that the safety function of the work vehicle 10 is activated more than necessary when the work efficiency priority mode is set. Furthermore, in other words, the operation controller 21 may increase the safety function of the work vehicle 10 when the safety priority mode is set, as compared with the safety function of the work vehicle 10 when work efficiency priority mode is selected.

The vehicle controller 11 of the work vehicle 10 may include each function of the operation controller 21 according to the present embodiment. That is, according to the embodiment described above, the operation controller 21 corresponds to the route setting system according to the present invention, but the route setting system according to the present invention may include the work vehicle 10 alone. Further, the route setting system according to the present invention may include the work vehicle 10 and the operation terminal 20. Moreover, a server, which may communicate with the operation terminal 20, may include each function of the operation controller 21.

### [Notes of Invention]

The summary of the invention extracted from the embodiments are described below as notes. Further, the configurations and processing functions described below as notes may be selected or omitted and combined as appropriate.

### <Note 1>

A route setting method includes setting a predetermined turning route among a plurality of turning routes having different turning methods, for each of a plurality of work paths included in a work area where a work vehicle autonomously travels in accordance with a target route and setting the target route including the turning route set for each of the plurality of work paths and a work route set corresponding to the work area.

### <Note 2>

The route setting method according to Note 1 further includes accepting a first user operation to select a predetermined turning route from the plurality of turning routes and setting a turning route selected by the first user operation for each of the plurality of work paths.

### <Note 3>

The route setting method according to Note 2 further includes accepting the first user operation for each of a plurality of outer periphery edges forming the work area.

### <Note 4>

The route setting method according to Note 2 or 3 further includes displaying each of the plurality of outer periphery edges in a different display form on an operation screen when the turning route having a different turning method is set for each of the plurality of outer periphery edges.

### <Note 5>

In the route setting method according to any one of Notes 2 to 4, the work area includes an inner area where the work vehicle travels back and forth and an outer area where the work vehicle travels by rotating along an outer periphery of the work area, and the route setting method further comprises accepting a second user operation to select a number of laps for rotating travel in the outer area.

### <Note 6>

The route setting method according to Note 5 further includes enabling acceptance of the first user operation when a predetermined number is selected as the number of laps by the second user operation.

### <Note 7>

In the route setting method according to Note 6, the predetermined number is such a number that a total working width corresponding to the predetermined number is less than a width that enables turning without traveling backward from a first work route to a second work route in the inner area.

### <Note 8>

In the route setting method according to any one of Notes 2 to 7, the work area includes an inner area where the work vehicle travels back and forth and an outer area where the work vehicle travels by rotating along an outer periphery of the work area, the plurality of turning routes includes a first turning route for turning the work vehicle in the outer area having a first predetermined width and a second turning route for turning the work vehicle in the outer area having a second predetermined width narrower than the first predetermined width, and the route setting method further includes selectively displaying either a first turning mode corresponding to the first turning route or a second turning mode corresponding to the second turning route in the first user operation.

### <Note 9>

In the route setting method according to Note 8, the first turning route is set so that a start point of the turning route is set at a first position and the second turning route is set so that a start point of the turning route is set at a second position closer to an outer periphery side than the first position.

### <Note 10>

The route setting method according to Note 8 further includes reducing a safety function of the work vehicle when the second turning mode is selected, as compared with a safety function of the work vehicle when the first turning mode is selected.

### <Note 11>

The route setting method according to any one of Notes 2 to 10 further includes permitting acceptance of the first user operation after autonomous traveling of the work vehicle starts.

### REFERENCE SIGNS LIST

1 Autonomous traveling system
10 Work vehicle
11 Vehicle controller
12 Storage unit
13 Vehicle body
14 Work machine
15 Communication unit
16 Positioning device
17 Obstacle detection unit
20 Operation terminal
21 Operation controller
111 Traveling processing unit
112 Detection processing unit
211 Display processing unit
212 Acceptance processing unit
213 Setting processing unit
214 Output processing unit
A1 Mound
F Field (work area)
Fa Inner area
Fb Headland area (outer area)
R Target route
Ra Work route
Rb Work route

## Claims

1. A route setting method comprising:
setting a predetermined turning route among a plurality of turning routes having different turning methods, for each of a plurality of work paths included in a work area where a work vehicle autonomously travels in accordance with a target route; and
setting the target route including the turning route set for each of the plurality of work paths and a work route set corresponding to the work area.

2. The route setting method according to claim 1, further comprising:
accepting a first user operation to select a predetermined turning route from the plurality of turning routes; and
setting a turning route selected by the first user operation for each of the plurality of work paths.

3. The route setting method according to claim 2, further comprising accepting the first user operation for each of a plurality of outer periphery edges forming the work area.

4. The route setting method according to claim 3, further comprising displaying each of the plurality of outer periphery edges in a different display form on an operation screen when the turning route having a different turning method is set for each of the plurality of outer periphery edges.

5. The route setting method according to claim 2, wherein
the work area includes an inner area where the work vehicle travels back and forth and an outer area where the work vehicle travels by rotating along an outer periphery of the work area, and
the route setting method further comprises accepting a second user operation to select a number of laps for rotating travel in the outer area.

6. The route setting method according to claim 5, further comprising enabling acceptance of the first user operation when a predetermined number is selected as the number of laps by the second user operation.

7. The route setting method according to claim 6, wherein the predetermined number is such a number that a total working width corresponding to the predetermined number is less than a width that enables turning without traveling backward from a first work route to a second work route in the inner area.

8. The route setting method according to any one of claims 2 to 7, wherein
the work area includes an inner area where the work vehicle travels back and forth and an outer area where the work vehicle travels by rotating along an outer periphery of the work area,
the plurality of turning routes includes a first turning route for turning the work vehicle in the outer area having a first predetermined width and a second turning route for turning the work vehicle in the outer area having a second predetermined width narrower than the first predetermined width, and
the route setting method further comprises selectively displaying either a first turning mode corresponding to the first turning route or a second turning mode corresponding to the second turning route in the first user operation.

9. The route setting method according to claim 8, wherein
the first turning route is set so that a start point of the turning route is at a first position; and
the second turning route is set so that a start point of the turning route is at a second position closer to an outer periphery side than the first position.

10. The route setting method according to claim 8, further comprising reducing a safety function of the work vehicle when the second turning mode is selected, as compared with a safety function of the work vehicle when the first turning mode is selected.

11. The route setting method according to claim 2, further comprising permitting acceptance of the first user operation after autonomous traveling of the work vehicle starts.

12. A route setting system comprising a setting processing unit that sets a predetermined turning route among a plurality of turning routes having different turning methods, for each of a plurality of work paths included in a work area where a work vehicle autonomously travels in accordance with a target route and that sets the target route including the turning route set for each of the plurality of work paths and a work route set corresponding to the work area.

13. A route setting program causing one or more processors to execute:
setting a predetermined turning route among a plurality of turning routes having different turning methods, for each of a plurality of work paths included in a work area where a work vehicle autonomously travels in accordance with a target route; and
setting the target route including the turning route set for each of the plurality of work paths and a work route set corresponding to the work area.
